(19)

Europäisches
Patentamt
European
Patent Office
Office européen
des brevets

(11) **EP 3 696 214 A1**

(12) # EUROPEAN PATENT APPLICATION

(43) Date of publication:
**19.08.2020 Bulletin 2020/34**

(51) Int Cl.:
***C08J 5/04*** *(2006.01)*          ***B29C 70/06*** *(2006.01)*

(21) Application number: **19156844.3**

(22) Date of filing: **13.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG**
**1220 Vienna (AT)**

(72) Inventors:
• **Lummerstorfer, Thomas**
**4021 Linz (AT)**

• **Kralicek, Markus**
**4021 Linz (AT)**
• **Stockreiter, Wolfgang**
**4021 Linz (AT)**
• **Jerabek, Michael**
**4021 Linz (AT)**
• **Kastl, Jochen**
**38446 Wolfsburg (DE)**

(74) Representative: **Maiwald Patent- und
Rechtsanwaltsgesellschaft mbH
Elisenhof
Elisenstraße 3
80335 München (DE)**

(54) **REINFORCEMENT OF MOULDED PARTS WITH PP UNIDIRECTIONAL LONG GLASS FIBER (LGF) RODS**

(57)    The present invention is directed to an endless fiber reinforced composite product (P), comprising unidirectional long fibers embedded in a matrix of an impregnating polymer (IP) an optional coating polymer (CP) the endless fiber reinforced composite product (P) having a length of at least 150 mm in the direction of the long fibers and a circular cross section perpendicular to fiber direction, a process for its preparation, and a moulded article comprising the endless fiber reinforced composite product (P) having a three dimensional long fiber reinforcement structure.

**Description**

The present invention is directed to an endless fiber reinforced composite product comprising a fiber reinforced composition (C), said fiber-reinforced composition (C) comprising an impregnating polymer (IP) an optional coating polymer (CP) and long fibers (LF). The present invention is also directed to a moulded article comprising the fiber-reinforced composition (C) and the use of the endless fiber reinforced composite product for preparing moulded articles.

The mechanical performance of fiber reinforced polypropylene compositions, especially the stiffness and strength, is typically adjusted with the fiber content. In particular, increasing the fiber content leads to an increase of stiffness and strength. The addition of fibers to a polypropylene composition also leads to an improved notched impact and puncture performance.

However, there is the general difficulty of achieving excellent fiber reinforcement for larger moulded articles and moulded articles with complex three dimensional shapes because fiber reinforcement of moulded articles having large size and complex shape will only be insufficient when the usual pellets and granules are used for reinforcement since the pellets or granules have much smaller dimension than the moulded articles.

Accordingly, there is the need for improved fiber-reinforcement of moulded articles of large size and three dimensional shape. In particular, there is the need for a fiber reinforcement product that provides fiber reinforcement continuously extending from one end of a large-sized or three dimensionally shaped moulded article to its other end. However, in order to achieve such extended fiber reinforcement in the article, a fiber reinforced product for further overmoulding is required that a) is long enough for spanning the whole size of a large-sized moulded article and b) can be bent in all three dimensions in an equal manner to adequately reinforce moulded articles with complex shape along all directions. The hitherto available fiber reinforced composite products in the form of tapes and strands are not suitable for such application due to their rectangular cross section leading to additional torsion when bending in different directions. These products are therefore largely cut to fiber-reinforcing pellets or granules but not used as large-sized long fiber reinforcement materials.

Therefore, it is an object of the present invention to provide an endless fiber reinforced composite product comprising a fiber-reinforced composition (C) comprising an impregnating polymer (IP) an optional coating polymer (CP) and long fibers (LF), which can be used for fiber reinforcement of large-sized moulded articles and moulded articles having complex three dimensional shapes.

The finding of the present invention is to provide an endless fiber reinforced composite product (P) having a length of at least 150 mm in the direction of the fiber and a circular cross section as well as its preparation. The present invention also provides a moulded article (A), which is fiber reinforced by the endless fiber reinforced composite product (P).

Thus, the present invention is directed to an endless fiber reinforced composite product (P) comprising a fiber-reinforced composition (C), the fiber reinforced composition (C) comprising:

(i) an impregnating polymer (IP),
(ii) long fibers (LF),
(iii) optionally a coating polymer (CP),
(iv) optionally an elastomeric ethylene copolymer (E),
(v) optionally an adhesion promoter (AP), and
(vi) optional additives,

the long fibers (LF) being embedded in a matrix formed by the impregnating polymer (IP), the optional coating polymer (CP), the optional elastomeric ethylene copolymer (E), the optional adhesion promoter (AP) and optional additives, characterized in that the endless fiber reinforced composite product (P) has a circular cross section perpendicular to the direction of the long fibers (LF) and a length of at least 150 mm in the direction of the fiber.

In a preferred embodiment, the endless fiber reinforced composite product (P) is in the form of a rod, which is not in the form of a rectangular sheet, a rectangular tape, a pellet or a granule.

In another preferred embodiment, the length of the endless fiber reinforced composite product (P) in the direction of the long fibers (LF) is from 150 mm to 500 m, preferably from 250 mm to 300 m, more preferably from 500 mm to 200 m, even more preferably from 1 m to 100 m, or even more preferably from 10 m to 50 m and most preferably from 20 m to 40 m.

In another preferred embodiment, the impregnating polymer (IP) has a melt flow rate MFR$_2$ (230 °C, 2.16 kg) determined according to ISO 1133 in the range of 75 to 500 g/10 min, preferably in the range of 100 to 480 g/10 min, more preferably in the range of 200 to 475 g/10 min, even more preferably in the range of 300 to 460 g/10 min, or most preferably in the range of 400 to 450 g/10 min.

In another preferred embodiment, the impregnating polymer (IP) is a propylene homopolymer (h-PP).

In another preferred embodiment, the fiber reinforced composition (C) comprises a coating polymer (CP) having a melt flow rate $MFR_2$ (230 °C, 2.16 kg) determined according to ISO 1133 in the range of 10 to 500 g/10 min, preferably in the range of 30 to 480 g/10 min, more preferably in the range of 50 to 475 g/10 min, even more preferably in the range of 100 to 460 g/10 min, or most preferably in the range of 200 to 450 g/10 min.

In another preferred embodiment, the melt flow rate $MFR_2$ (230 °C, 2.16 kg) determined according to ISO 1133 of the coating polymer (CP) is not higher than the melt flow rate $MFR_2$ (230 °C, 2.16 kg) determined according to ISO 1133 of the impregnating polymer (IP).

In another preferred embodiment, the ratio of the melt flow rate $MFR_2$ (230 °C, 2.16 kg) determined according to ISO 1133 of the impregnating polymer (IP) and the melt flow rate $MFR_2$ (230 °C, 2.16 kg) determined according to ISO 1133 of the coating polymer (CP) [$MFR_2$ (IP) / $MFR_2$(CP)] is from 10/1 to 1/1, preferably from 6/1 to 1.1/1, even more preferably from 4/1 to 1.2/1, and most preferably from 2/1 to 1.3/1.

In another preferred embodiment, the fiber-reinforced composition (C) comprises based on the total weight of the fiber-reinforced composition (C):

    (i) 22.0 to 45.0 wt.-% of the impregnating polymer (IP),
    (ii) 22.0 to 45.0 wt.-% of the coating polymer (CP),
    (iii) 7.9 to 50.0 wt.-% of long fibers (LF),
    (iv) optionally 2.0 to 12.0 wt.-% of an elastomeric ethylene copolymer (E),
    (v) optionally 0.1 to 5.0 wt.-% of an adhesion promoter (AP), and
    (vi) optional additives.

In another preferred embodiment, the combined amount of the impregnating polymer (IP), the coating polymer (CP) and the long fibers (LF) is at least 80 wt.-%, preferably at least 90 wt.-%, based on the total weight of the endless fiber reinforced composite product (P).

In another preferred embodiment, the long fibers (LF) are selected from the group consisting of glass fibers, metal fibers, mineral fibers, ceramic fibers, carbon fibers, polymer fibers, graphite fibers and mixtures thereof.

In another aspect, the present invention is directed to a moulded article (A) comprising a three-dimensional long fiber reinforcement structure within the moulded article, optionally extending from one end of the moulded article (A) to the other end of the moulded article (A), wherein the three-dimensional long fiber reinforcement structure comprises long fibers (LF) embedded in a polypropylene matrix and is in the form of a rod, which is not in the form of a rectangular sheet, a rectangular tape, a pellet or a granule and has a circular cross section perpendicular to the direction of the long fibers (LF) and a length of at least 150 mm in the direction of the fiber.

In a preferred embodiment, the three dimensional long fiber reinforcement structure reinforces bends or curves of the moulded article by extending over the bends or curves of the moulded article (A).

In another aspect, the present invention is directed to a process for the preparation of the endless fiber reinforced composite product (P) according to the present invention comprising the steps of:

-    contacting long fibers (LF) with a molten impregnating polymer (IP) to obtain long fibers (LF) impregnated with the impregnating polymer (IP),
-    optionally coating the long fibers (LF) impregnated with the impregnating polymer (IP) with a coating polymer (CP),
-    shaping the long fibers (LF) impregnated with the molten impregnating polymer (IP) and optionally coated with the coating polymer (CP) into endless rods having a circular cross section perpendicular to the fiber direction, and
-    cooling the long fibers (LF) and the impregnating polymer (IP) and the optional coating polymer (CP) to obtain the endless fiber reinforced composite product (P) having circular cross section perpendicular to the direction of the long fibers (LF),

wherein the endless fiber reinforced composite product (P) is not prepared at the end of the preparation process to form pellets or granules but to obtain the endless fiber reinforced composite product (P) having a length of at least 150 mm in the direction of the long fibers (LF).

In another preferred embodiment of the process, shaping of the long fibers (LF) impregnated with the impregnating polymer (IP) and optionally coated with the coating polymer (CP) into endless rods having a circular cross section perpendicular to the fiber direction is carried out by pulling the long fibers (LF) impregnated with the molten impregnating polymer (IP) and optionally coated with the coating polymer (CP) through a circular die before cooling the long fibers impregnated with the impregnating polymer (IP) and optionally coated with the coating polymer (CP) to obtain the endless fiber reinforced composition (C) having circular cross section perpendicular to the fiber direction.

In another aspect, the present invention is directed to a moulded article (A) comprising the endless fiber reinforced composite product (P), wherein the endless fiber-reinforced composite product (P) forms a three-dimensional long fiber reinforcement structure in the moulded article.

In a preferred embodiment, the three dimensional long fiber reinforcement structure extends from one end of the moulded article (A) to the other end of the moulded article (A).

In another preferred embodiment, the three dimensional long fiber reinforcement structure reinforces bends or curves of the moulded article by extending over the bends or curves of the moulded article (A).

In another preferred embodiment, the moulded article comprising the endless fiber-reinforced composite product (P) is further overmoulded by a matrix of thermoplastic polymer.

In another preferred embodiment, the matrix of thermoplastic polymer comprises a polyolefin polymer, a propylene homopolymer, a random copolymer and/or a heterophasic polypropylene composition.

In another preferred embodiment, the moulded article is an exterior or interior automotive article.

In another preferred embodiment, the moulded article is selected from door modules, seat structures, tail gates, arm rests, roof structures, chassis beams, pedals, bumpers, side trims, step assists, body panels, spoilers, dashboards, and interior trims.

In another aspect, the present invention is directed to an use of the endless fiber reinforced composite product (P) for preparing a moulded article (A) comprising a three dimensional fiber support structure formed by the endless fiber reinforced composite product (P) embedded into an overmoulded matrix of thermoplastic polymer.

In the following, the present invention is described in more detail.

**The endless fiber reinforced composite product (P)**

The endless fiber reinforced composite product (P) comprises long fibers (LF) which are embedded into a matrix comprising the other components of the fiber reinforced composition (C) including the essential impregnating polymer (IP). The long fibers (LF) and the impregnating polymer (IP) are the essential components of the endless fiber reinforced composite product (P).

According to the present invention, the long fibers (LF) of the endless fiber reinforced composite product (P) are fully covered or impregnated, i.e. surrounded, by a matrix of the impregnating polymer (IP). In other words, the long fibers (LF) are embedded in a matrix of the impregnating polymer (IP). The long fibers (LF) typically form a bundle of a higher number of single filaments that preferably constitute a core of uni-directionally oriented long fibers (LF) in the endless fiber reinforced composite product (P), whereas the impregnating polymer (IP) and the other optional components including the optional coating polymer (CP), the optional elastomeric ethylene copolymer (E), the optional adhesion promoter (AP) and the optional additives constitute the matrix of the endless fiber reinforced composite product (P).

The fiber reinforced polypropylene composition (C) is defined herein as "fiber reinforced" because it contains the essential long fibers (CF).

The endless fiber reinforced composite (P) according to the present invention comprises, preferably consists of, the fiber reinforced composition (C) having the following components:

  (i) the impregnating polymer (IP),
  (ii) long fibers (LF),
  (iii) the optional coating polymer (CP),
  (iv) the optional elastomeric ethylene copolymer (E),
  (v) the optional adhesion promoter (AP), and
  (vi) the optional additives.

The components (i) to (vi) of the fiber reinforced composition (C) are separately defined in more detail below. However, the present invention includes that the preferred embodiments of components (i) to (vi) can be combined in the endless fiber reinforced composite product (P) and the fiber reinforced composition (C).

It is an essential feature of the endless fiber reinforced composite product (P) that it has a circular cross section perpendicular to the direction of the long fibers (LF) and a length of at least 150 mm in the direction of the fiber.

In a preferred embodiment of the endless fiber reinforced composite product (P) according to the present invention, the content of the long fibers (LF) in the endless fiber reinforced composite product (P) is preferably in the range from 30 to 80 wt.%, more preferably in the range from 35 to 75 wt.-%, even more preferably in the range of 40 to 70 wt.-%, and most preferably in the range of 50 to 65 wt.-%, based on the total weight of the endless fiber reinforced composite product (P).

Preferably, the content of the fiber-reinforced composition (C) in the endless fiber reinforced composite product (P) is in the range from 20 to 70 wt.%, more preferably in the range from 25 to 65 wt.-%, even more preferably in the range of 30 to 60 wt.-%, and most preferably in the range of 35 to 50 wt.-%, based on the total weight of the endless fiber reinforced composite product (P)

The endless fiber reinforced composite product (P) according to the present invention is not only defined by the presence and relative amounts of its components (i) to (vi) as herein defined below but in particular by its special dimensions, most importantly its length in fiber direction and its shape which includes a circular cross section perpendicular to the direction of the long fibers.

The endless fiber reinforced composite product (P) is endless. The term "endless" herein defines that the endless reinforced composite product (P) has a length of at least 150 mm in the direction of the long fibers (LF) but can extend to virtually any possible upper limit of length in the direction of the long fibers (LF). Accordingly, the upper limit of the length of the endless fiber reinforced composite product (P) is not particularly limited. The length can be very high, and is basically only limited by practical difficulties to store, transport or further process the endless fiber reinforced composite product (P) in an adequate way after it has been produced.

The length of the endless product can be from 150 mm to 500 m, preferably from 250 mm to 300 m, more preferably from 500 mm to 200 m, even more preferably from 1 m to 100 m, or even more preferably from 10 m to 50 m and most preferably from 20 m to 40 m.

As it is derivable from the length of the endless fiber reinforced composite product (P), the endless fiber reinforced composite product (P) can be in the form of endless rods (or strands). Accordingly, the endless fiber reinforced composite product (P) is preferably a rod-shaped unidirectional fiber-reinforced composite product (P) having a length of at least 150 mm in the direction of the unidirectionally oriented long fibers (LF). Therefore, the endless fiber reinforced product (P) differs from products already known in the prior art from not being in the form of a pellet or a granule, like such known products are normally prepared from fiber reinforced composite products, especially when such products are unidirectional.

The long fibers (LF) are aligned in bundles in the endless fiber reinforced composite product (P), wherein the bundles of fibers can combine varying numbers of single fibers or filaments.

It is essential for the present invention that all the long fibers (LF) in the endless fiber reinforced composition (P) of the present invention, and consequently the bundle comprising, preferably consisting of the individual long fibers (LF), are/is aligned in the same direction or substantially the same direction. Accordingly, the endless fiber reinforced composite product (P) constitutes a so-called unidirectional fiber reinforced composite product.

The endless fiber reinforced composite product (P) is constituted by an endless rod or strand that has a circular cross section perpendicular to the direction of the long fibers (LF). The circular cross section is another very preferred technical feature making the endless fiber reinforced composite product (P) different from hitherto known rods or strands of fiber-reinforced composite products because the endless fiber reinforced composite product (P) has no rectangular cross section like the products from the prior art have when being in the form of a rectangular sheet or a rectangular tape.

The diameter of the circular cross section is preferably constant in the direction of the long fibers (LF). The diameter of the endless fiber reinforced composite product (P) perpendicular to the direction of the long fibers (LF) preferably is from 0.5 mm to 10.0 mm, preferably from 1.0 mm to 5.0 mm, more preferably from 1.0 mm to 3.0 mm, most preferably from 1.5 mm to 2.5 mm. Alternatively, it is also possible that the diameter of the endless fiber reinforced composite product (P) can vary in the direction of the long fibers (LF) within the range from 0.5 mm to 10.0 mm, preferably from 1.0 mm to 5.0 mm, more preferably from 1.0 mm to 3.0 mm, most preferably from 1.5 mm to 2.5 mm.

The endless fiber reinforced composite product (P) according to the present invention preferably has a melt flow rate $MFR_2$ (230 °C, 2.16 kg) determined according to ISO 1133 in the range of 40 to 700 g/10 min, preferably in the range of 50 to 600, more preferably in the range of 70 to 500 g/10 min, even more preferably in the range of 80 to 480 g/10 min, or most preferably in the range of 90 to 450 g/10.

**The preparation process for the endless fiber reinforced composite product (P)**

The basic process steps for preparing unidirectional fiber-reinforced composite products is well-known in the art. A preferred type of process to be used in the present invention is the pultrusion technology. Such processes have been described in detail in EP 0 170 245 A2, EP 0 056 703 A1, EP 0 397 505 B1 and EP 2 231 908 B1. An impregnating tool for preparing impregnating fiber rovings is described in EP 0 397 505 B1. The basic principles of the established pultrusion approaches also apply to the presently claimed preparation process. However, in these known processes only pellets or granules are prepared and the cross section of the fiber composite products has not been circular since only rectangular tapes or strands are produced in these standard approaches from the prior art.

The endless fiber reinforced composite product (P) according to the present invention is prepared by a process comprising the steps of:

a) contacting long fibers (LF) with a molten impregnating polymer (IP) to obtain long fibers (LF) impregnated with the impregnating polymer (IP),
b) optionally coating the long fibers (LF) impregnated with the impregnating polymer (IP) with a coating polymer (CP),
c) shaping the long fibers (LF) impregnated with the molten impregnating polymer (IP) and optionally coated with the coating polymer (CP) into endless rods having a circular cross section perpendicular to the fiber direction, and
d) cooling the long fibers (LF) and the impregnating polymer (IP) and the optional coating polymer (CP) to obtain the endless fiber reinforced composite product (P) having circular cross section perpendicular to the direction of the long fibers (LF),

wherein the endless fiber reinforced composite product (P) is not prepared at the end of the preparation process to form pellets or granules but to obtain the endless fiber reinforced composite product (P) having a length of at least 150 mm in the direction of the long fibers (LF).

Preferred additional components, which can be used in this preparation process are the optional components (iv) to (vi) of the fiber reinforced composition (C) including the optional elastomeric ethylene copolymer (E), the optional adhesion promoter (AP) and/or the optional additives.

In a preferred embodiment of the preparation process for preparing the endless fiber reinforced composite product (P), the shaping of the long fibers (LF) impregnated with the impregnating polymer (IP) and optionally coated with the coating polymer (CP) into endless rods having a circular cross section perpendicular to the fiber direction is carried out by pulling the long fibers (LF) impregnated with the molten impregnating polymer (IP) and optionally coated with the coating polymer (CP) through a circular die before cooling the long fibers impregnated with the impregnating polymer (IP) and optionally coated with the coating polymer (CP) to obtain the endless fiber reinforced composition (C) having circular cross section perpendicular to the fiber direction.

It is preferred that in a first step of the preparation process, long fibers (LF) are impregnated using an impregnating tool with the impregnating polymer (IP), and preferably followed up by coating with a coating polymer (CP). In another preferred embodiment, impregnating the long fibers (LF) with the impregnating polymer (IP) can be carried out in the presence of an additional adhesion promoter (AP), which is described in further detail below. Alternatively or additionally, the adhesion promoter (AP) can be added when coating the long fibers (LF) with the coating polymer (CP). Similarly, the optional elastomeric ethylene copolymer (E) and/or the optional additives can be added when impregnating the long fibers (LF) with the impregnating polymer (IP) and/or when coating the long fibers (LF) impregnated with the impregnating polymer (IP) with the coating polymer (CP).

In the coating step following the impregnation step, the impregnated fiber rovings are combined and further processed by passing the impregnated fiber rovings through a coating die. As mentioned above, when passing the impregnated fiber rovings through the coating die, the impregnated fiber rovings are preferably further coated with the coating polymer (CP) and/or with the additional optional components of the fiber reinforced composition (C), like for instance the elastomeric ethylene copolymer (E), the adhesion promoter (AP) and/or the additional additives.

In another preferred embodiment of the preparation process of the present invention, the cooling of the impregnated and coated long fibers (LF) can be carried out by pulling through a water bath.

In a final step, the impregnated and coated long fibers (LF) can be optionally dried to give the endless fiber reinforced composite product (P) comprising the fiber-reinforced composition (C).

**The fiber reinforced composition (C)**

The endless fiber reinforced composite (P) according to the present invention comprises, preferably consists of, the fiber reinforced composition (C) having the following components:

    (i) the essential impregnating polymer (IP),
    (ii) the essential long fibers (LF),
    (iii) the optional coating polymer (CP),
    (iv) the optional elastomeric ethylene copolymer (E),
    (v) the optional adhesion promoter (AP), and
    (vi) the optional additives.

In a preferred embodiment, the fiber-reinforced composition (C) used for preparing the endless fiber reinforced composite (P) comprises, based on the total weight of the fiber-reinforced composition (C):

    (i) 22.0 to 45.0 wt.-% of the impregnating polymer (IP),
    (ii) 22.0 to 45.0 wt.-% of the coating polymer (CP),
    (iii) 7.9 to 50.0 wt.-% of long fibers (LF),
    (iv) optionally 2.0 to 12.0 wt.-% of an elastomeric ethylene copolymer (E),
    (v) optionally 0.1 to 5.0 wt.-% of an adhesion promoter (AP), and
    (vi) optional additives.

Preferably, the combined amount of the impregnating polymer (IP), the coating polymer (CP) and the long fibers (LF) is at least 80 wt.-%, preferably at least 90 wt.-%, based on the total weight of the fiber-reinforced composition, or based on the total weight of the endless fiber reinforced composite product (P).

In a preferred embodiment, the impregnating polymer (IP), the coating polymer (CP), the elastomeric ethylene copolymer (E), the adhesion promoter (AP) and the long fibers (LF) make up the main part of the fiber reinforced polypropylene composition (C), i.e. the fiber reinforced polypropylene composition (C) does not contain more than 20 wt.-%, preferably not more than 10 wt.-%, and even more preferably not more than 5 wt.-%, based on the total amount the fiber reinforced polypropylene composition (C), of (additional) polymers other than the impregnating polymer (IP), the coating polymer (CP), the optional elastomeric ethylene copolymer (E) and the optional adhesion promoter (AP). It is especially preferred when the impregnating polymer (IP), the coating polymer (CP), the optional elastomeric ethylene copolymer (E), the optional adhesion promoter (AP) and the long fibers (LF) make up at least 97 wt.-% of the fiber reinforced polypropylene composition (C).

Additional polymers can be for instance polymeric carriers for additives (AD). Accordingly, in one specific embodiment the fiber reinforced polypropylene composition (C) consists of the impregnating polymer (IP), the coating polymer (CP), the optional elastomeric ethylene copolymer (E), the optional adhesion promoter (AP), the long-fibers (LF) and additives (AD) including their polymeric carriers.

If the optional elastomeric ethylene copolymer (E) is present in the fiber reinforced composition (C), the fiber reinforced composition (C) comprises the elastomeric ethylene copolymer (E) in rather low amounts in order to achieve a good balance between stiffness and impact properties. Thus, it is preferred that the fiber reinforced composition (C) comprises the impregnating polymer (IP) and the coating polymer (CP) on the one hand and the elastomeric ethylene copolymer (E) on the other hand in a weight ratio of 85 : 15 to 99 : 1, more preferably in a weight ratio of 87 : 13 to 97 : 3, still more preferably in a weight ratio of 90 : 10 to 95 : 5.

Additionally or alternatively, it is preferred that the fiber reinforced composition (C) comprises the long fibers (LF) and the ethylene copolymer (E) in a weight ratio of 95 : 5 to 70 : 30, more preferably in a weight ratio of 93 : 7 to 80 : 20, still more preferably in a weight ratio of 91 : 9 to 98 : 11.

As indicated above, it is preferred that the fiber reinforced polypropylene composition (C) also includes additives (AD).

Accordingly, it is preferred that the fiber reinforced polypropylene composition (C) comprises, more preferably consists of, 22.0 to 45.0 wt.-%, more preferably 28.0 to 78.0 wt.-%, still more preferably 33.0 to 76.0 wt.-% of the impregnating polymer (IP), 22.0 to 45.0 wt.-%, more preferably 28.0 to 78.0 wt.-%, still more preferably 33.0 to 76.0 wt.-% of the coating polymer (CP), 2.0 to 12.0 wt.-%, more preferably 2.2 to 11.0 wt.-%, still more preferably 2.5 to 10.0 wt.-% of the elastomeric ethylene copolymer (E), 0.1 to 5.0 wt.-% more preferably 1.0 to 3.0 wt.-%, still more preferably 1.5 to 2.0 wt.-% of the adhesion promoter (AP), 10.0 to 70.0 wt.-%, more preferably 15.0 to 60.0 wt.-%, still more preferably 20.0 to 50.0 wt.-% of the long fibers (LF) and optionally 0.05 to 5.0 wt.-%, more preferably 0.1 to 4.0 wt.-%, still more preferably 1.0 to 3.0 wt.-% of additives (AD), based on the overall weight of the fiber reinforced composition (C). The additives (AD) are described in more detail below.

It is preferred that the fiber reinforced polypropylene composition (C) has a melt flow rate $MFR_2$ (230 °C, 2.16 kg) determined according to ISO 1133 in the range of 40 to 700 g/10 min, more preferably in a range of 70 to 600 g/10 min, still more preferably in a range of 120 to 500 g/10 min, or most preferably in the range of 150 to 480 g/10 min.

As outlined above, it is appreciated that the fiber reinforced polypropylene composition (C) according to the present invention is a rather stiff material. Accordingly, it is preferred that the fiber reinforced polypropylene composition (C) has a tensile modulus determined according to ISO 527 of at least 4000 MPa, more preferably in the range of 4000 to 20 000 MPa, still more preferably in the range of 4500 to 17 000 MPa, like in the range of 5000 to 12 500 MPa.

Further, it is preferred that the inventive fiber reinforced polypropylene composition (C) is featured by an improved impact behavior. Thus, it is preferred that the fiber reinforced polypropylene composition (C) has a puncture energy determined according to ISO 6603 of at least 8.0 J, more preferably at least 8.5 J, still more preferably at least 9.0 J.

Additionally or alternatively, it is preferred that the fiber reinforced polypropylene composition (C) has a Charpy notched impact strength determined according to ISO 179 / 1eA at 23 °C of at least 5.0 kJ/m$^2$, more preferably at least 10. kJ/m$^2$, still more preferably at least 12.0 kg/m$^2$ and/or a Charpy unnotched impact strength determined according to ISO 179 / 1eU at 23 °C of at least 40.0 kg/m$^2$, more preferably at least 50.0 kg/m$^2$, still more preferably at least 60.0 kg/m$^2$.

**The impregnating polymer (IP) and the coating polymer (CP)**

As outlined above, the fiber reinforced polypropylene composition (C) comprises an impregnating polymer (IP) as an essential component. It is very preferred that the impregnating polymer (IP) is a thermoplastic polymer.

The impregnating polymer (IP) preferably has a melt flow rate $MFR_2$ (230 °C, 2.16 kg) determined according to ISO 1133 in the range of 75 to 500 g/10 min, preferably in the range of 100 to 480 g/10 min, more preferably in the range of 200 to 475 g/10 min, even more preferably in the range of 300 to 460 g/10 min, and most preferably in the range of 400 to 450 g/10 min.

The impregnating polymer (IP) can be a propylene copolymer or a propylene homopolymer, the latter being preferred.

In case the impregnating polymer (IP) is a propylene copolymer, the impregnating polymer (IP) comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene. Preferably the impregnating polymer (IP) according to this invention comprises, especially consists of, monomers copolymerizable with propylene from the group consisting of ethylene, 1-butene and 1-hexene. More specifically the impregnating polymer (IP) of this invention comprises - apart from propylene - units derivable from ethylene and/or 1-butene. In a preferred embodiment the impregnating polymer (IP) comprises units derivable from ethylene and propylene only.

The comonomer content of the impregnating polymer (IP) is in the range of 0.0 to 5.0 mol-%, yet more preferably in the range of 0.0 to 3.0 mol-%, still more preferably in the range of 0.0 to 1.0 mol-%.

However, it is especially preferred that the impregnating polymer (IP) is a propylene homopolymer (H-PP) essentially lacking comonomers.

According to the present invention the expression "propylene homopolymer" relates to a polypropylene that consists substantially, i.e. of at least 99.0 wt.-%, more preferably of at least 99.5 wt.-%, still more preferably of at least 99.8 wt.-%, like of at least 99.9 wt.-%, of propylene units. In another embodiment only propylene units are detectable, i.e. only propylene has been polymerized.

Preferably, the impregnating polymer (IP) is isotactic. Accordingly, it is preferred that the impregnating polymer (IP) has a rather high pentad concentration (mmmm%) i.e. more than 94.1 %, more preferably more than 94.4 %, like more than 94.4 to 98.5 %, still more preferably at least 94.7 %, like in the range of 94.7 to 97.5 %.

It is also preferred that the impregnating polymer (IP) is featured by rather low cold xylene solubles (XCS) content, i.e. by a xylene cold soluble (XCS) below 3.1 wt.-%. Accordingly, the impregnating polymer (IP) has preferably a xylene cold solubles (XCS) content in the range of 1.0 to 3.0 wt.-%, more preferably in the range of 1.5 to 2.8 wt.-%, still more preferably in the range of 2.0 to 2.6 wt.-%.

The amount of xylene cold solubles (XCS) additionally indicates that the impregnating polymer (IP) is preferably free of any elastomeric polymer component, like an ethylene propylene rubber. In other words, impregnating polymer (IP) shall be not a heterophasic polypropylene, i.e. a system consisting of a polypropylene matrix in which an elastomeric phase is dispersed. Such systems are featured by a rather high xylene cold soluble content.

The amount of xylene cold solubles (XCS) additionally indicates that the impregnating polymer (IP) preferably does not contain elastomeric (co)polymers forming inclusions as a second phase for improving mechanical properties. A polymer containing elastomeric (co)polymers as insertions of a second phase would by contrast be called heterophasic and is preferably not part of the present invention. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Accordingly, it is preferred that the impregnating polymer (IP) according to this invention has no glass transition temperature below -30 °C, preferably below -25 °C, more preferably below -20 °C.

On the other hand, in one preferred embodiment, the impregnating polymer (IP) according to this invention has a glass transition temperature in the range of -12 to 4 °C, more preferably in the range of -10 to 4 °C.

Further, the impregnating polymer (IP) is preferably a crystalline propylene homopolymer. The term "crystalline" indicates that the impregnating polymer (IP) has a rather high melting temperature. Accordingly throughout the invention the impregnating polymer (IP) is regarded as crystalline unless otherwise indicated. Therefore, the impregnating polymer (IP) preferably has a melting temperature Tm measured by differential scanning calorimetry (DSC) of at least 160 °C, more preferably at least 161 °C, still more preferably at least 163 °C, like in the range of 163 °C to 167 °C.

Further it is preferred that the impregnating polymer (IP) has a crystallization temperature Tc measured by differential scanning calorimetry (DSC) of equal or more than 108 °C, more preferably in the range of 110 to 130 °C, more preferably in the range of 112 to 126 °C.

In addition, the fiber reinforced polypropylene composition (C) comprises a coating polymer (CP) as an optional component. In fact, it is preferred that the fiber reinforced polypropylene composition (C) comprises a coating polymer (CP). It is very preferred that the coating polymer (CP) is a thermoplastic polymer.

The coating polymer (CP) preferably has a melt flow rate $MFR_2$ (230 °C, 2.16 kg) determined according to ISO 1133 in the range of 10 to 500 g/10 min, preferably in the range of 30 to 480 g/10 min, more preferably in the range of 50 to 475 g/10 min, even more preferably in the range of 100 to 460 g/10 min, or most preferably in the range of 200 to 450 g/10 min.

In another preferred embodiment, the melt flow rate $MFR_2$ (230 °C, 2.16 kg) determined according to ISO 1133 of the coating polymer (CP) is not higher than the melt flow rate $MFR_2$ (230 °C, 2.16 kg) determined according to ISO 1133 of the impregnating polymer (IP).

In another preferred embodiment, the ratio of the melt flow rate $MFR_2$ (230 °C, 2.16 kg) determined according to ISO 1133 of the impregnating polymer (IP) and the melt flow rate $MFR_2$ (230 °C, 2.16 kg) determined according to ISO 1133 of the coating polymer (CP) [$MFR_2$ (IP) / $MFR_2$(CP)] is from 10/1 to 1/1, preferably from 6/1 to 1.1/1, even more preferably from 4/1 to 1.2/1, and most preferably from 2/1 to 1.3/1.

**The elastomeric ethylene copolymer (E)**

The fiber reinforced polypropylene composition (C) according to the instant invention can further optionally comprise an elastomeric ethylene copolymer (E).

Preferably, the elastomeric ethylene copolymer (E) is a very low density polyolefin, more preferably a very low density polyolefin polymerized using single site, preferably metallocene catalysis.

In a preferred embodiment, the elastomeric ethylene copolymer (E) has a density below 0.900 g/cm$^3$. More preferably, the density of the elastomeric ethylene copolymer (E) is equal or below 0.890 g/cm$^3$, still more preferably in the range of 0.845 to 0.890 g/cm$^3$, like in the range of 0.870 to 0.885 g/cm$^3$.

Preferably, the elastomeric ethylene copolymer (E) has a melt flow rate MFR$_2$ (190 °C, 2.16 kg) of at least 25 g/10 min, more preferably from 25 to 50 g/10 min, still more preferably from 28 to 40 g/10 min, like a range from 29 to 35 g/10 min.

Preferably, the elastomeric ethylene copolymer (E) comprises units derived from ethylene and a C4 to C20 α-olefin.

The elastomeric ethylene copolymer (E) comprises, preferably consists of, units derivable from (i) ethylene and (ii) at least another C4 to C20 α-olefin, like C4 to C10 α-olefin, more preferably units derivable from (i) ethylene and (ii) at least another α-olefin selected form the group consisting of 1-butene, 1-pentene, 1-hexene, 1-heptene and 1-octene. It is especially preferred that the elastomeric ethylene copolymer (E) comprises at least units derivable from (i) ethylene and (ii) 1-butene or 1-octene.

In an especially preferred embodiment, the elastomeric ethylene copolymer (E) consists of units derivable from (i) ethylene and (ii) 1-butene or 1-octene. In particular, it is preferred that the elastomeric ethylene copolymer (E) is a copolymer of ethylene and 1-octene.

The comonomer content, like the C4 to C20 α-olefin content, of the elastomeric ethylene copolymer (E) is in the range of 4 to 25 mol-%, more preferably in the range of 5 to 20 mol-%, still more preferably in the range of 6 to 12 mol-%, like in the range of 5 to 10 mol-%.

In one preferred embodiment the elastomeric ethylene copolymer (E) is prepared with at least one metallocene catalyst. The elastomeric ethylene copolymer (E) may also be prepared with more than one metallocene catalyst or may be a blend of multiple elastomers prepared with different metallocene catalysts. In some embodiments, the elastomeric ethylene copolymer (E) is a substantially linear ethylene polymer (SLEP). SLEPs and other metallocene catalysed elastomeric ethylene copolymer (E) are known in the art, for example, US 5,272,236. These resins are also commercially available, for example, as Queo™ plastomers available from Borealis, ENGAGE™ plastomer resins available from Dow Chemical Co., EXACT™ polymers from Exxon or TAFMER™ polymers from Mitsui, Lucene polymers from LG, Fortify polymers from Sabic or Solumer polymers from SK Chemicals.

**The adhesion promoter (AP)**

In accordance with the present invention, the fiber reinforced polypropylene composition (C) can further optionally comprise an adhesion promoter (AP). The adhesion promoter (AP) is specified as being a polar modified polypropylene (PM-PP) homo- or copolymer.

The polar modified polypropylene (PM-PP) homo- or copolymer comprises a low molecular weight compound having reactive polar groups. Modified polypropylene homopolymers and copolymers, like copolymers of propylene and ethylene or with other α-olefins, e.g. C$_4$ to C$_{10}$ α-olefins, are most preferred, as they are highly compatible with the impregnating polymer (IP) of the inventive fiber reinforced polypropylene composition (C).

In terms of structure, the polar modified polypropylene (PM-PP) homo- or copolymer are preferably selected from graft homo- or copolymers.

In this context, preference is given to polar modified polypropylene (PM-PP) homo- or copolymers containing groups derived from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of said polar compounds are unsaturated cyclic anhydrides and their aliphatic diesters, and the diacid derivatives. In particular, one can use maleic anhydride and compounds selected from C$_1$ to C$_{10}$ linear and branched dialkyl maleates, C$_1$ to C$_{10}$ linear and branched dialkyl fumarates, itaconic anhydride, C$_1$ to C$_{10}$ linear and branched itaconic acid dialkyl esters, acrylic acid, maleic acid, fumaric acid, itaconic acid and mixtures thereof.

Particular preference is given to use a polypropylene homo- or copolymer grafted with maleic anhydride or acrylic acid as the polar modified polypropylene (PM-PP) homo- or copolymer, i.e. the adhesion promoter (AP).

The modified polymer, i.e. the adhesion promoter, can be produced in a simple manner by reactive extrusion of the polymer, for example with maleic anhydride or acrylic acid in the presence of free radical generators (like organic peroxides), as disclosed for instance in US 4,506,056, US 4,753,997 or EP 1 805 238.

Preferred amounts of groups derived from polar compounds in the polar modified polypropylene (PM-PP) homo- or copolymer, i.e. the adhesion promoter (AP), are from 0.5 to 10 wt.-%. For example, in the range of 0.5 wt.-% to 8 wt.-%, preferable in the range of 0.5 wt.-% to 6 wt.-%, more preferably in the range of 0.5 wt.-% to 4 wt.-% and most preferably in the range of 0.5 wt.-% to 3.5 wt.-%.

Preferred values of the melt flow rate $MFR_2$ (190 °C) for the polar modified polypropylene (PM-PP) homo- or copolymer, i.e. for the adhesion promoter (AP), are from 2 to 500 g/10 min. It is particularly preferred that the polar modified polypropylene (PM-PP) homo- or copolymer has a melt flow rate $MFR_2$ (190 °C) of at least 50 g/10 min.

In one preferred embodiment of the present invention, the adhesion promoter (AP) is a maleic anhydride modified polypropylene homo-or copolymer and/or an acrylic acid modified polypropylene homo-or copolymer. Preferably, the adhesion promoter (AP) is a maleic anhydride modified polypropylene homopolymer and/or an acrylic acid modified polypropylene homopolymer and preferably a maleic anhydride modified polypropylene homopolymer. For example, suitable polar modified polypropylene (PM-PP) homo- or copolymers include, for example, a polypropylene homopolymer grafted with maleic anhydride (PP-g-MAH) and a polypropylene homopolymer grafted with acrylic acid (PP-g-AA).

**The long fibers (LF)**

Essential components of the present fiber reinforced polypropylene composition (C) are the long fibers (LF).

Preferably the long fibers (LF) are selected from the group consisting of glass fibers, metal fibers, mineral fibers, ceramic fibers, carbon fibers, polymer fibers, graphite fibers and mixtures thereof. Glass fibers are preferred. In particular, the long fibers (LF) are obtained from glass rovings.

The long fibers (LF) used in the fiber reinforced polypropylene composition (C) preferably have an average diameter of at least 5 μm, more preferably from 6 to 25 μm, more preferably from 7 to 20 μm, for example 7 to 18 μm.

The content of the long fibers (LF) in the endless fiber reinforced composite product (P) is preferably in the range from 25 to 80 wt.%, more preferably in the range from 30 to 75 wt.-%, even more preferably in the range of 40 to 70 wt.-%, and most preferably in the range of 50 to 65 wt.-%, based on the total weight of the endless fiber reinforced composite product (P).

The fiber reinforced composition (C) is obtained by a strand of long fiber reinforced polypropylene obtained by contacting the long fibers (LF) with the molten impregnating polymer (IP) and, optionally, the coating polymer (CP) and/or the adhesion promotor (AP) and/or the elastomeric ethylene copolymer (E) and/or the additional additives (AD).

**The additives (AD)**

In addition to the impregnating polymer (IP), the optional coating polymer (CP), the optional elastomeric ethylene copolymer (E), the optional adhesion promoter (AP) and the essential long-fibers (LF), the fiber reinforced polypropylene composition (C) of the invention may further include additives (AD). Typical additives are acid scavengers, antioxidants, colorants, light stabilisers, plasticizers, slip agents, anti-scratch agents, dispersing agents, processing aids, lubricants, pigments, and the like.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

*The Polymeric Carrier Material*

Preferably the fiber reinforced polypropylene composition (C) of the invention does not comprise (a) further polymer (s) different to the impregnating polymer (IP), the optional coating polymer (CP), the optional elastomeric ethylene copolymer (E) and the optional adhesion promoter (AP), in an amount exceeding 15 wt.-%, preferably in an amount exceeding 10 wt.-%, more preferably in an amount exceeding 9 wt.-%, based on the weight of the fiber reinforced polypropylene composition (C). Any polymer being a carrier material for additives (AD) is not calculated to the amount of polymeric compounds as indicated in the present invention, but to the amount of the respective additive.

The polymeric carrier material of the additives (AD) is a carrier polymer to ensure a uniform distribution in the fiber reinforced polypropylene composition (C) of the invention. The polymeric carrier material is not limited to a particular polymer. The polymeric carrier material may be ethylene homopolymer, ethylene copolymer obtained from ethylene and α-olefin comonomer such as $C_3$ to $C_8$ α-olefin comonomer, propylene homopolymer and/or propylene copolymer obtained from propylene and α-olefin comonomer such as ethylene and/or $C_4$ to $C_8$ α-olefin comonomer. It is preferred that the polymeric carrier material does not contain monomeric units derivable from styrene or derivatives thereof.

**The moulded article (A) comprising the endless fiber reinforced composite (P)**

As outlined above, the present invention is also directed to an article comprising the fiber reinforced polypropylene composition (C).

According to a preferred embodiment of the present invention, the article comprises 10.0 to 90.0 wt.-%, more preferably 15.0 to 85.0 wt.-%, still more preferably 20.0 to 80.0 wt.-%, of the fiber reinforced polypropylene composition (C), based on the overall weight of the article.

Accordingly, the moulded article (A) can comprise the endless fiber reinforced composite (P) as one main component. Accordingly, the basic idea of the present invention is that the moulded article (A) comprises the endless fiber reinforced composite product (P), wherein the endless fiber-reinforced composite product (P) is able to form a three-dimensional fiber reinforcement structure within the moulded article.

The term "three-dimensional fiber reinforcement structure" in the moulded article (A) means that the long fibers (LF) constitute a fiber reinforcement structure within the moulded article (A), in which the long fibers (LF) extend to all three dimensions over the moulded article (A). It is especially preferred that the three dimensional fiber reinforcement structure of the present invention comprises long fibers that have a length of at least 150 mm, wherein the long fibers reinforce the complex shape of the moulded article by reproducing the curves and bends of the moulded article, preferably essentially over its complete size.

Accordingly, the three-dimensional fiber reinforcement structure is different from one or two dimensional fiber reinforcement structures, in which the long fibers (LF) extend to only one or two dimensions. A comparative one dimensional fiber reinforcement structure only consists of long fibers which are not bent in a substantial way to form curves or loops but is limited to include only straight-line fiber bundles. A comparative two dimensional reinforcement structure only includes long fibers (LF) which are only bent in one plane defined by two dimensions like for instance it is found in knitted fabric reinforcement composite structures, or two dimensional woven flat structures or flat needle punched structures.

The three dimensional reinforcement structure according to the present invention also differs from known reinforcement structures which are widely obtained by the use of fiber reinforcement composite products in the form of pellets or granules because the three dimensional long fiber reinforcement structures in the moulded articles according to the present invention comprise long fibers (LF) having a length of at least 150 mm. The three dimensional long fiber reinforcement structure according to the present invention is prepared from the endless fiber reinforced composite product (P) which has a length of at least 150 mm and the latter product (P) is not further prepared like cut before used to prepare moulded articles to lengths shorter than 150 mm.

Accordingly, the long fibers (LF) in the endless fiber reinforced composite product (P) as well as in the three dimensional long fiber reinforcement structure of the final moulded article have a minimum length of at least 150 mm, preferably in the range of 170 mm to 3 m, more preferably in the range of 200 mm to 2 m, even more preferably in the range of 300 mm to 1 m, or most preferably in the range of 400 mm to 800 mm.

The technical advantage arising from the three dimensional long fiber reinforcement structure is that the three dimensional moulded composite article has an internal three dimensional fiber reinforcement structure that supports the shape of the whole composite article over all bends and curves because the long fibers forming the three dimensional fiber reinforcement structure in the moulded article (A) extends over the curves and bends of the moulded article. Accordingly, such bends and curves of the moulded article are also reinforced by the three dimensional fiber reinforcement structure.

This is not possible in composite articles of the prior art when only pellet or granule composite products are used to prepare moulded fiber reinforced composite articles. This fiber reinforcement effect is also not possible to obtain with the hitherto known rectangular fiber reinforced composite products in the form of tapes and strands even before such tapes and strands are cut to pellets or granules because a critical requirement is not only a minimum length of the endless fiber reinforced composite product used for preparing the moulded article and the unidirectional fibers contained therein. Another important requirement for the endless fiber reinforced composite product (P) when it is used for preparing a three dimensional fiber reinforcement structure in a moulded article is a circular cross section. However, endless fiber reinforced composite products in the form of tapes having rectangular cross section have been hitherto considered unsuitable for preparing larger three dimensional fiber reinforcement structures in moulded articles. The reason is that rectangular tapes cannot be bent in all three dimensions without causing additional torsional tension in various directions when three dimensionally bending the rectangular tapes.

Accordingly, in order to overcome this problem, the present inventors have suggested to prepare the endless fiber reinforced composite product (P) of the present invention.

Therefore, in a preferred embodiment of the present invention, the endless fiber reinforced composite product (P) of the present invention has the additional technical advantage of a circular cross section in the direction of the unidirectionally oriented long fibers (LF) allowing to bend the endless fiber reinforced composite product when used for fiber reinforcement in moulded articles into all three directions without the build-up of undesired torsions within the three dimensional long fiber reinforcement structure thereby allowing to create a three dimensional torsion-free long fiber reinforcement composite structure in large moulded articles.

In another preferred embodiment, it is especially preferred when the three dimensional long fiber reinforcement structure in the moulded article spans from one end of the moulded article to the other end of the moulded article. If the three dimensional long fiber reinforcement structure extends from one end of the moulded article to the other end of it, the three dimensional long fiber reinforcement structure is able to support the moulded article over all bends and curves throughout the whole three dimensional shape of the moulded article and the fiber reinforcement effect is maximized in the composite article.

Preferably, the three dimensionally long fiber reinforced composite article is a moulded article, more preferably an injection moulded article. It is especially preferred that the article is an injection moulded automotive article.

In a preferred embodiment of the present invention, the moulded article (A) comprises the endless fiber-reinforced composite product (P) overmoulded by an additional matrix of thermoplastic polymer.

The matrix of the thermoplastic polymer of the moulded article can include, can consist of, many different polymeric materials, depending on the desired properties of the moulded article. In particular, adding an additional matrix of thermoplastic polymer by overmoulding with a thermoplastic polymer material to obtain the moulded article (A) comprising the endless fiber reinforced composite product (P) allows preparing moulded articles (A) having special geometries and shapes as well as special mechanical properties.

Preferably, the matrix of thermoplastic polymer of the moulded article (A) comprises a polyolefin, like a polyethylene, a propylene homopolymer, a random copolymer and/or a heterophasic polypropylene composition (HECO).

In one preferred embodiment, the propylene homopolymer suitable for overmoulding can be selected from the impregnating polymer (IP), the coating polymer (CP) as defined above or a mixture thereof.

In another preferred embodiment, the propylene homopolymer for overmoulding can be a random copolymer (R-PP). The term "random" indicates that the comonomer of the random propylene copolymer (R-PP) is randomly distributed within the copolymer of propylene. The term random is understood according to IUPAC (Glossary of basic terms in polymer science; IUPAC recommendations 1996). Thereby, a random copolymer of propylene includes a fraction, which is insoluble in xylene, i.e. xylene cold insoluble (XCU) fraction, preferably when measured as defined below under "1. Measuring methods", in an amount of at least 80 wt.-%, still more preferably of at least 85 wt.-% and most preferably of at least 90 wt.-%, based on the total amount of the random copolymer of propylene.

As known for a skilled person, a random copolymer is different from heterophasic polypropylene. In contrast to a heterophasic polypropylene, the random copolymer does not contain an elastomeric polymer phase dispersed therein. Thereby, the term "random copolymer of propylene" according to the present invention does not include heterophasic systems. In other words, the first propylene homopolymer (H-PP), like the random propylene copolymer (R-PP), does not comprise an elastomeric phase, i.e. is monophasic.

In another preferred embodiment, the propylene homopolymer for overmoulding can be a heterophasic polypropylene composition (HECO) typically containing a heterophasic propylene copolymer (HECO) comprising a polypropylene as a matrix in which an elastomeric propylene copolymer is dispersed. The expression "heterophasic propylene copolymer" or "heterophasic" as used in the instant invention indicates that the elastomeric propylene copolymer is (finely) dispersed in the crystalline or at least semicrystalline polypropylene. In other words the crystalline or at least semicrystalline polypropylene constitutes a matrix in which the elastomeric propylene copolymer forms inclusions in the matrix, i.e. in the crystalline or at least semicrystalline polypropylene. Thus the matrix contains (finely) dispersed inclusions being not part of the matrix and said inclusions contain the elastomeric propylene copolymer. The term "inclusion" according to this invention shall preferably indicate that the matrix and the inclusion form different phases within the heterophasic propylene copolymer, said inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

The endless fiber reinforced composite product (P) of the present invention is preferably used for the production of a moulded article (A), preferably an automotive article, like a moulded automotive article, preferably an automotive injection moulded article. Even more preferred is a moulded article suitable in the production of car interiors and exteriors, like door modules, seat structures, tail gates, arm rests, roof structures, chassis beams, pedals bumpers, side trims, step assists, body panels, spoilers, dashboards, interior trims and the like.

In a preferred embodiment, the article, like the injection-molded article, comprises at least 10 wt.-%, more preferably at least 15 wt.-%, yet more preferably at least 20 wt.-%, of the endless fiber reinforced composite product (P), based on the total weight of the article comprising the endless fiber reinforced composite product (P).

Another aspect of the present invention is directed to the use of the endless fiber reinforced composite product (P) of the present invention for preparing an moulded article (A) comprising a three dimensional long fiber support structure formed by the endless fiber reinforced composite product (P) embedded into an overmoulded matrix of a thermoplastic polymer.

The present invention will now be described in further detail by the examples provided below.

**EXAMPLES**

**1. Measuring methods**

**MFR$_2$ (230 °C)** is measured according to ISO 1133 (230 °C, 2.16 kg load).
**MFR$_2$ (190 °C)** is measured according to ISO 1133 (190 °C, 2.16 kg load).
The melt flow rate MFR$_2$ (230 °C) of the propylene polymer (PP) is calculated according to equation (I)

$$\log MFR(PP) = w(PP1) \cdot \log MFR(PP1)\, w(PP2) \cdot$$
$$\log MFR(PP2) + w(PP3) \cdot \log MFR(PP3) \qquad (I),$$

Wherein

| | |
|---|---|
| w(PP-1) | is the weight fraction of the first propylene polymer (PP-1) |
| w(PP-2) | is the weight fraction of the second propylene polymer (PP-2) |
| w(PP-3) | is the weight fraction of the third propylene polymer (PP-3) |
| MFR(PP-1) | is the melt flow rate MFR$_2$ (230 °C, 2.16 kg) in g/10 min of the first propylene polymer (PP-1) |
| MFR(PP-2) | is the melt flow rate MFR$_2$ (230 °C, 2.16 kg) in g/10 min of the second propylene polymer (PP-2), |
| MFR(PP-3) | is the melt flow rate MFR$_2$ (230 °C, 2.16 kg) in g/10 min of the third propylene polymer (PP-3), and |
| MFR(PP) | is the melt flow rate MFR$_2$ (230 °C, 2.16 kg) in g/10 min of the propylene polymer (PP) |

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).
For polypropylene homopolymers all chemical shifts are internally referenced to the methyl isotactic pentad (mmmm) at 21.85 ppm.
Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.
The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).
Specifically the influence of regio defects and comonomer on the quantification of the tacticity distribution was corrected for by subtraction of representative regio defect and comonomer integrals from the specific integral regions of the stereo sequences.
The isotacticity was determined at the pentad level and reported as the percentage of isotactic pentad (mmmm) sequences with respect to all pentad sequences:

$$[\text{mmmm}]\ \% = 100 * (\ \text{mmmm}\ /\ \text{sum of all pentads}\ )$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\ I_{e6} + I_{e8}\ )\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ \text{mol}\% = 100 * (\ P_{21e}\ /\ P_{total}\ )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E \ [mol\%] = 100 * fE$$

The weight percent comonomer incorporation was calculated from the mole fraction:

$$E \ [wt\%] = 100 * (fE * 28.06) \ / \ ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Number average molecular weight ($M_n$), weight average molecular weight ($M_w$) and molecular weight distribution (MWD)**

Molecular weight averages (Mw, Mn), and the molecular weight distribution (MWD), i.e. the polydispersity Mw/Mn (wherein Mn is the number average molecular weight and Mw is the weight average molecular weight), were determined by Gel Permeation Chromatography (GPC) according to ISO 16014-4:2003 and ASTM D 6474-99. A Polymer-Char GPC instrument, equipped with infrared (IR) detector was used with 3 x Olexis and Ix Olexis Guard columns from Polymer Laboratories and 1 ,2,4-trichlorobenzene (TCB, stabilized with 250 mg/L 2,6-Di tert butyl-4-methyl-phenol) as solvent at 160 °C and at a constant flow rate of 1 mL/min. 200 $\mu$l̈ṫ. of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**DSC analysis, melting temperature ($T_m$) and heat of fusion ($H_f$), crystallization temperature ($T_c$) and melt enthalpy (Hm):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. The crystallization temperature ($T_c$) is determined from the cooling step, while melting temperature ($T_m$) and melting enthalpy ($H_m$) are determined from the second heating step. The crystallinity is calculated from the melting enthalpy by assuming an Hm-value of 209 J/g for a fully crystalline polypropylene (see Brandrup, J., Immergut, E. H., Eds. Polymer Handbook, 3rd ed. Wiley, New York, 1989; Chapter 3).

**The glass transition temperature Tg** is determined by dynamic mechanical analysis according to ISO 6721-7. The measurements are done in torsion mode on compression moulded samples (40x10x1 mm$^3$) between -100 °C and +150 °C with a heating rate of 2 °C/min and a frequency of 1 Hz.

**Comonomer content in elastomer (E)** was measured in a known manner based on Fourier transform infrared spectroscopy (FTIR) calibrated with $^{13}$C-NMR, using Nicolet Magna 550 IR spectrometer together with Nicolet Omnic FTIR software. Films having a thickness of about 250 $\mu$m were compression molded from the samples. Similar films were made from calibration samples having a known content of the comonomer. The comonomer content was determined from the spectrum from the wave number range of from 1430 to 1100 cm$^{-1}$. The absorbance is measured as the height of the peak by selecting the so-called short or long base line or both. The short base line is drawn in about 1410 - 1320 cm$^{-1}$ through the minimum points and the long base line about between 1410 and 1220 cm$^{-1}$. Calibrations need to be done specifically for each base line type. Also, the comonomer content of the unknown sample needs to be within the range of the comonomer contents of the calibration samples.

**Ash content** is measured according to ISO 3451-1 (1997) standard.

**Density** is measured according to ISO 1183-187. Sample preparation is done by compression moulding in accordance with ISO 1872-2:2007.

**Charpy notched and unnotched impact strength** is determined according to ISO 179-1 / 1eA and ISO 179-1 / 1eU at 23 °C by using injection moulded test specimens (80 x 10 x 4 mm) as described in ISO 19069-2 unless indicated otherwise.

**Tensile properties** were determined on injection molded dogbone specimens prepared in accordance with ISO 19069-2 unless indicated otherwise. Tensile modulus was determined according to ISO 527-1A at 1 mm/min. and 23°C. To determine stress at yield and strain at yield, a speed of 50 mm/min. was used.

**Instrumented falling weight test:** Puncture energy, maximum force and puncture deflection was determined in the instrumented falling weight test according to ISO 6603-2 using injection moulded plaques of 60x60x3 mm in accordance with ISO 19069-2 unless indicated otherwise and a test speed of 4.4 m/s. The reported puncture energy results from an integral of the failure energy curve measured at +23°C and -30°C.

**Average fiber diameter** is determined according to ISO 1888:2006(E), Method B, microscope magnification of 1000.

## 2. Examples

The present invention is illustrated with respect to the inventive three-dimensional long fiber reinforcement structure by a moulded article like for instance a three-dimensionally shaped plastic part when this type of reinforcement structure is compared to a conventional, mostly linear or two-dimensional fiber reinforcement structure.

The level of reinforcement is analyzed for example by studying and testing the produced parts, or alternatively, by simulating a simple three dimensional part like for instance an L-space assembly part with several connection points.

This L-shaped part can be typically made from polypropylene and it will be reinforced for the comparative sample with single unidirectional glass fiber reinforced units well-known as tapes which are positioned in the part but not connected with each other in the way that the fibers can transfer loads directly to each other.

As an inventive test sample illustrating the benefit of the claimed invention, the same L-shaped part (similar in shape and size) will be reinforced with the same amount of inventive rod obtained as described in the present invention constituting a three-dimensional fiber reinforcement structure with the glass fibers directly connected to each other.

To both parts, the same load cases will be applied and stiffness will be evaluated. This set-up illustrates that the inventive example can provide less deformation at the same amount of external load.

Furthermore, different strength characteristics of the two L-shaped parts will be demonstrated by a simulation experiment showing that at the same load case the internal stress is lower in the inventive sample comprising the inventive three-dimensional long fiber reinforcement structure relative to the same sample comprising the conventional, mostly linear or two-dimensional reinforcement structure.

In addition, it can be shown by common physical testing that the inventive sample can stand higher loads than the comparative example.

## Claims

1. Endless fiber reinforced composite product (P) comprising a fiber-reinforced composition (C), the fiber reinforced composition (C) comprising:

      (i) an impregnating polymer (IP),
      (ii) long fibers (LF),
      (iii) optionally, a coating polymer (CP),
      (iv) optionally an elastomeric ethylene copolymer (E),
      (v) optionally an adhesion promoter (AP), and
      (vi) optional additives,

    the long fibers (LF) being embedded in a matrix formed by the impregnating polymer (IP), the optional coating polymer (CP), the optional elastomeric ethylene copolymer (E), the optional adhesion promoter (AP) and optional additives, **characterized in that** the endless fiber reinforced composite product (P) has a circular cross section perpendicular to the direction of the long fibers (LF) and a length of at least 150 mm in the direction of the fiber.

2. Endless fiber reinforced composite product (P) according to claim 1, wherein the endless fiber reinforced composite product (P) is in the form of a rod, which is not in the form of a rectangular sheet, a rectangular tape, a pellet or a granule.

3. Endless fiber reinforced composite product (P) according to claim 1 or 2, wherein the length of the endless fiber reinforced composite product (P) in the direction of the long fibers (LF) is from 150 mm to 500 m, preferably from 250 mm to 300 m, more preferably from 500 mm to 200 m, even more preferably from 1 m to 100 m, or even more preferably from 10 m to 50 m and most preferably from 20 m to 40 m.

4. Endless fiber reinforced composite product (P) according to any one of the preceding claims 1 to 3, wherein the impregnating polymer (IP) has a melt flow rate $MFR_2$ (230 °C, 2.16 kg) determined according to ISO 1133 in the range of 75 to 500 g/10 min, preferably in the range of 100 to 480 g/10 min, more preferably in the range of 200 to 475 g/10 min, even more preferably in the range of 300 to 460 g/10 min, or most preferably in the range of 400 to 450 g/10 min.

5. Endless fiber reinforced composite product (P) according to any one of the preceding claims 1 to 4, wherein the impregnating polymer (IP) is a propylene homopolymer (h-PP).

6. Endless fiber reinforced composite product (P) according to any one of the preceding claims 1 to 5, wherein the fiber reinforced composition (C) comprises a coating polymer (CP) having a melt flow rate $MFR_2$ (230 °C, 2.16 kg) determined according to ISO 1133 in the range of 10 to 500 g/10 min, preferably in the range of 30 to 480 g/10 min, more preferably in the range of 50 to 475 g/10 min, even more preferably in the range of 100 to 460 g/10 min, or most preferably in the range of 200 to 450 g/10 min.

7. Endless fiber reinforced composite product (P) according to claim 6, wherein the melt flow rate $MFR_2$ (230 °C, 2.16 kg) determined according to ISO 1133 of the coating polymer (CP) is not higher than the melt flow rate $MFR_2$ (230 °C, 2.16 kg) determined according to ISO 1133 of the impregnating polymer (IP).

8. Endless fiber reinforced composite product (P) according to claim 6 or 7, wherein the ratio of the melt flow rate $MFR_2$ (230 °C, 2.16 kg) determined according to ISO 1133 of the impregnating polymer (IP) and the melt flow rate $MFR_2$ (230 °C, 2.16 kg) determined according to ISO 1133 of the coating polymer (CP) [$MFR_2$ (IP) / $MFR_2$ (CP)] is from 10/1 to 1/1, preferably from 6/1 to 1.1/1, even more preferably from 4/1 to 1.2/1, and most preferably from 2/1 to 1.3/1.

9. Endless fiber reinforced composite product (P) according to any one of the preceding claims 6 to 8, wherein the fiber-reinforced composition (C) comprises based on the total weight of the fiber-reinforced composition (C):

   (i) 22.0 to 45.0 wt.-% of the impregnating polymer (IP),
   (ii) 22.0 to 45.0 wt.-% of the coating polymer (CP),
   (iii) 7.9 to 50.0 wt.-% of long fibers (LF),
   (iv) optionally 2.0 to 12.0 wt.-% of an elastomeric ethylene copolymer (E),
   (v) optionally 0.1 to 5.0 wt.-% of an adhesion promoter (AP), and
   (vi) optional additives.

10. Endless fiber reinforced composite product (P) according to claim 9, wherein the combined amount of the impregnating polymer (IP), the coating polymer (CP) and the long fibers (LF) is at least 80 wt.-%, preferably at least 90 wt.-%, based on the total weight of the endless fiber reinforced composite product (P).

11. Endless fiber reinforced composite product (P), according to any one of the preceding claims 1 to 10, wherein the long fibers (LF) are selected from the group consisting of glass fibers, metal fibers, mineral fibers, ceramic fibers, carbon fibers, polymer fibers, graphite fibers and mixtures thereof.

12. Process for the preparation of the endless fiber reinforced composite product (P) according to any one of the preceding claims 1 to 11 comprising the steps of:

   - contacting long fibers (LF) with a molten impregnating polymer (IP) to obtain long fibers (LF) impregnated with the impregnating polymer (IP),
   - optionally coating the long fibers (LF) impregnated with the impregnating polymer (IP) with a coating polymer (CP),
   - shaping the long fibers (LF) impregnated with the molten impregnating polymer (IP) and optionally coated with the coating polymer (CP) into endless rods having a circular cross section perpendicular to the fiber direction, and
   - cooling the long fibers (LF) and the impregnating polymer (IP) and the optional coating polymer (CP) to obtain the endless fiber reinforced composite product (P) having circular cross section perpendicular to the direction of the long fibers (LF),

   wherein the endless fiber reinforced composite product (P) is not prepared at the end of the preparation process to form pellets or granules but to obtain the endless fiber reinforced composite product (P) having a length of at least 150 mm in the direction of the long fibers (LF).

13. Process according to claim 12, wherein shaping of the long fibers (LF) impregnated with the impregnating polymer (IP) and optionally coated with the coating polymer (CP) into endless rods having a circular cross section perpendicular to the fiber direction is carried out by pulling the long fibers (LF) impregnated with the molten impregnating polymer (IP) and optionally coated with the coating polymer (CP) through a circular die before cooling the long fibers impregnated with the impregnating polymer (IP) and optionally coated with the coating polymer (CP) to obtain the endless fiber reinforced composition (C) having circular cross section perpendicular to the fiber direction.

14. Moulded article (A) comprising a three-dimensional long fiber reinforcement structure within the moulded article wherein the three-dimensional long fiber reinforcement structure comprises long fibers (LF) embedded in a polypropylene matrix and is in the form of a rod having a circular cross section perpendicular to the direction of the long fibers (LF) and a length of at least 150 mm in the direction of the fiber, and which is not in the form of a rectangular sheet, a rectangular tape, a pellet or a granule.

15. Moulded article (A) according to claim 14, wherein the three dimensional long fiber reinforcement structure reinforces bends or curves of the moulded article by extending over the bends or curves of the moulded article (A).

16. Moulded article (A) comprising the endless fiber reinforced composite product (P) according to any one of the preceding claims 1 to 11, wherein the endless fiber-reinforced composite product (P) forms a three-dimensional long fiber reinforcement structure in the moulded article.

17. Moulded article (A) according to claim 16, wherein the three dimensional long fiber reinforcement structure extends from one end of the moulded article (A) to the other end of the moulded article (A).

18. Moulded article (A) according to claim 16 or 17, wherein the three dimensional long fiber reinforcement structure reinforces bends or curves of the moulded article by extending over the bends or curves of the moulded article (A).

19. Moulded article (A) according to any one of claims 16 to 18, wherein the moulded article comprising the endless fiber-reinforced composite product (P) is further overmoulded by a matrix of thermoplastic polymer.

20. Moulded article (A) according to claim 19, wherein the matrix of thermoplastic polymer comprises a polyolefin polymer, a propylene homopolymer, a random copolymer and/or a heterophasic polypropylene composition.

21. Moulded article (A) according to any one of claims 14 to 20, wherein the moulded article is an exterior or interior automotive article.

22. Moulded article (A) according to claim 21, wherein the moulded article is selected from door modules, seat structures, tail gates, arm rests, roof structures, chassis beams, pedals, bumpers, side trims, step assists, body panels, spoilers, dashboards, and interior trims.

23. Use of the endless fiber reinforced composite product (P) according to claims 1 to 11 for preparing a moulded article (A) comprising a three dimensional fiber support structure formed by the endless fiber reinforced composite product (P) embedded into an overmoulded matrix of thermoplastic polymer.

Europäisches
Patentamt

European
Patent Office

Office européen
des brevets

# EUROPEAN SEARCH REPORT

Application Number

EP 19 15 6844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI Week 199126 1991 Thomson Scientific, London, GB; AN 1991-190529 XP002793339, & JP H03 119188 A (MITSUBISHI KASEI CORP) 21 May 1991 (1991-05-21) * abstract * | 1-15 | INV. C08J5/04 B29C70/06 |
| X | US 2003/104191 A1 (YOKOO YUJI [JP] ET AL) 5 June 2003 (2003-06-05) * paragraphs [0001], [0007], [0008], [0011], [0014], [0015], [0016], [0018], [0023], [0025], [0040], [0046]; claims; examples * | 1,2,5, 11-13,23 | |
| X | US 2016/351300 A1 (DANIEL ALLAN [US] ET AL) 1 December 2016 (2016-12-01) * paragraphs [0065] - [0068], [0081], [0088] - [0090], [0127]; claims; figures; examples * | 1,2, 11-13, 17,23 | |
| A | TAPIO HARMIA ET AL.: "Long Fiber-Reinforced Thermoplastic Composites in Automotive Applications", POLYMER COMPOSITES: FROM NANO-TO-MACRO-SCALE, 2005, pages 255-262, XP9514961, * the whole document * | 1-23 | TECHNICAL FIELDS SEARCHED (IPC) C08J B29C |

The present search report has been drawn up for all claims

| Place of search | Date of completion of the search | Examiner |
|---|---|---|
| Munich | 2 August 2019 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 15 6844

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2019

| Patent document cited in search report | | Publication date | Patent family member(s) | | Publication date |
|---|---|---|---|---|---|
| JP H03119188 | A | 21-05-1991 | NONE | | |
| US 2003104191 | A1 | 05-06-2003 | JP | 3631994 B2 | 23-03-2005 |
| | | | JP | 2003165848 A | 10-06-2003 |
| | | | US | 2003104191 A1 | 05-06-2003 |
| US 2016351300 | A1 | 01-12-2016 | AR | 085999 A1 | 13-11-2013 |
| | | | AU | 2012242930 A1 | 02-05-2013 |
| | | | BR | 112013026310 A2 | 27-12-2016 |
| | | | CA | 2832453 A1 | 18-10-2012 |
| | | | CA | 2832823 A1 | 18-10-2012 |
| | | | CL | 2013002932 A1 | 05-09-2014 |
| | | | CN | 103534763 A | 22-01-2014 |
| | | | CN | 107742542 A | 27-02-2018 |
| | | | DK | 2697800 T3 | 27-02-2017 |
| | | | EP | 2697800 A1 | 19-02-2014 |
| | | | ES | 2617596 T3 | 19-06-2017 |
| | | | HU | E033251 T2 | 28-11-2017 |
| | | | MX | 346917 B | 05-04-2017 |
| | | | PL | 2697800 T3 | 31-07-2017 |
| | | | RU | 2013145605 A | 20-05-2015 |
| | | | TW | 201308357 A | 16-02-2013 |
| | | | TW | 201805956 A | 16-02-2018 |
| | | | US | 2016351300 A1 | 01-12-2016 |
| | | | US | 2017256338 A1 | 07-09-2017 |
| | | | US | 2018197658 A1 | 12-07-2018 |
| | | | WO | 2012142129 A1 | 18-10-2012 |
| | | | ZA | 201308410 B | 27-08-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0170245 A2
- EP 0056703 A1
- EP 0397505 B1
- EP 2231908 B1
- US 5272236 A
- US 4506056 A
- US 4753997 A
- EP 1805238 A

### Non-patent literature cited in the description

- **HANS ZWEIFEL.** Plastic Additives Handbook. 2009, 1141-1190
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **KAKUGO, M. ; NAITO, Y. ; MIZUNUMA, K. ; MIYATAKE, T.** *Macromolecules,* 1982, vol. 15, 1150
- Polymer Handbook. Wiley, 1989